# EUROPEAN PATENT SPECIFICATION

(11) **EP 2 487 572 B1**
(45) Date of publication and mention of the grant of the patent: **08.10.2014**
(21) Application number: 11165808.4
(22) Date of filing: 12.05.2011
(51) Int. Cl.: G06F 3/048, G06F 3/033

(54) **Systems and methods for screen data management**
Systeme und Verfahren zur Bildschirmdatenverwaltung
Systèmes et procédés de gestion des données d'écran

(30) Priority: 14.02.2011 US 201113026610
(43) Date of publication of application: 15.08.2012
(73) Proprietor: HTC Corporation, Taoyuan County 330 (TW)
(72) Inventor: Chen, Ying-Ju, Taoyuan City, Taoyuan County 330 (TW); Chen Hsueh-Chun, Taoyuan City, Taoyuan County 330 (TW); Coddington, Nicole Alexandra, Bellevue WA 98005 (US)
(74) Representative: 2K Patentanwälte Blasberg Kewitz & Reichel

(56) References cited:
- WO-A1-2010/070490
- US-A1- 2009 167 702

## Description

### BACKGROUND OF THE INVENTION

### Field of the Invention

The disclosure relates generally to methods and systems for screen data management, and, more particularly to methods and systems that automatically generate a screenshot for screen data and gestures of an object on the touch-sensitive display unit.

### Description of the Related Art

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

Currently, a handheld device may be equipped with a touch-sensitive display unit. Users can directly perform operations, such as application operations and data input via the touch-sensitive display unit. Generally, in computer systems, users can press a print screen key to generate a screenshot of screen data currently displayed in the display unit. However, no screenshot function is provided in the handheld devices.

Additionally, in some case, users may browse data, such as web pages or e-books using the handheld devices, and make some notes on the data via the touch-sensitive display unit of the handheld devices. Since the data to be browsed and the notes belong to independent applications, the data and the notes are respectively stored, and no association therebetween is provided. When users want to review the data, it is complicated for users to re-build the association between the data and the corresponding notes, and it is also impossible to share data integrated with the corresponding notes with others.

WO 2010070490 A relates to a medical image system, comprising a medical image processing module (20) and a user comment control module (30). The medical image processing module (20) includes at least a medical image display module (22) and a user comment initiation module (26). The user comment control module (30) includes at least: a screenshot capture module or hook (32) configured to capture a screenshot of operation of the medical image processing module at about a time of receipt of a signal from the user comment initiation module; a screenshot editing module or hook (36) configured to enable user editing of the captured screenshot to generate a user-edited screenshot; and a comment review/editing module or hook (40) configured to automatically generate and enable user editing and transmission of an electronic mail message having the user edited screenshot embedded or attached.

US 2009167702 A relates to a method of controlling a user interface of an apparatus, including sensing a first angular position of a pointing device relative to the user interface of the apparatus; and performing an operation based, at least partially, upon the sensed first angular position of the pointing device. An apparatus including a first section including a user interface comprising a touch sensor; and a sensor system for determining an angular position of a pointing device relative to a portion of the first section.

### BRIEF SUMMARY OF THE INVENTION

Methods and systems for screen data management are provided as defined in independent claims 1 and 8, respectively.

Further embodiments of the invention are specified in the appended dependent claims.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for screen data management of the invention;
Fig. 2 is a flowchart of an embodiment of a method for screen data management of the invention;
Fig. 3 is a schematic diagram illustrating an embodiment of an example of screen data management of the invention; and
Fig. 4 is a flowchart of another embodiment of a method for screen data management of the invention.

### DETAILED DESCRIPTION OF THE INVENTION

Methods and systems for screen data management are provided.

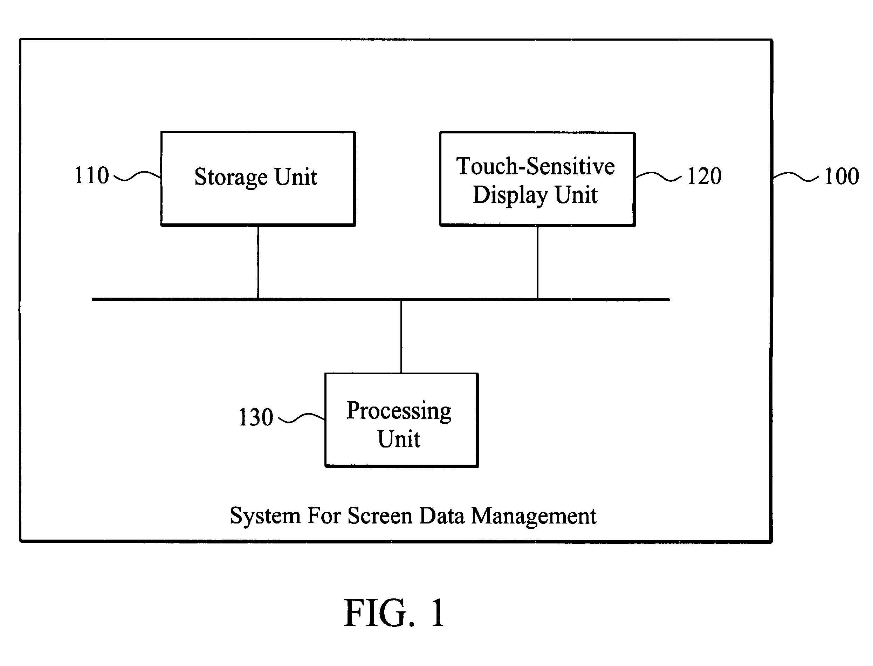

Fig. 1 is a schematic diagram illustrating an embodiment of a system for screen data management of the invention. The system for screen data management can be used in an electronic device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

The system for screen data management 100 comprises a storage unit 110, a touch-sensitive display unit 120, and a processing unit 130. The storage unit 110 can be used to store related data, such as calendars, files, web pages, images, and/or interfaces. The touch-sensitive display unit 120 is a screen integrated with a touch-sensitive device (not shown). The touch-sensitive device has a touch-sensitive surface comprising sensors in at least one dimension to detect contact and movement of an object (input tool), such as a pen/stylus or finger near or on the touch-sensitive surface. The touch-sensitive display unit 120 can display the data provided by the storage unit 110. It is understood that, in some embodiments, the data displayed in the touch-sensitive display unit 120 can be updated. For example, when users use the electronic device to visit a web site via a wireless network communication (not shown), related web pages displayed in the touch-sensitive display unit 120 may be dynamically updated. The processing unit 130 can perform the method for screen data management of the present invention, which will be discussed further in the following paragraphs. It is noted that, the processing unit 130 can further determine whether an object on the touch-sensitive display unit 120 is a pen or not. In some embodiment, the processing unit 120 determines whether the object is a pen or not by detecting whether a pen is in proximity to the electronic device or the touch-sensitive display unit. It is understood that, in some embodiments, a pen may have at least one physical button. When the physical button on the pen is pressed, a signal is transmitted from the pen to a reception unit (not shown) of the system. When the signal transmitted from the pen is detected/received, a pen is determined as in proximity to the electronic device or the touch-sensitive display unit.

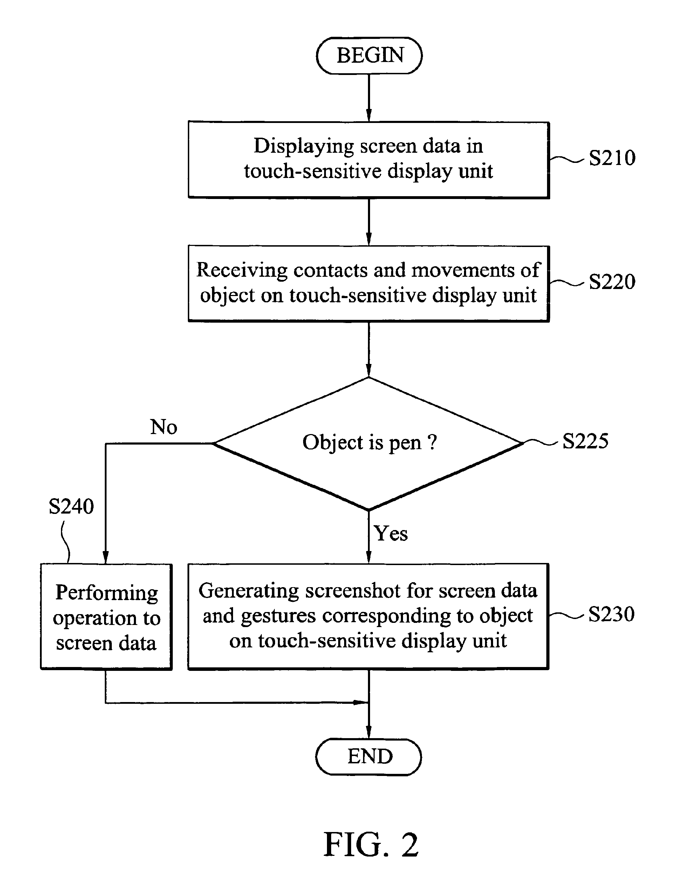

Fig. 2 is a flowchart of an embodiment of a method for screen data management of the invention. The method for screen data management can be used for an electronic device, such as a PDA, a smart phone, a mobile phone, an MID, a laptop computer, a car computer, a digital camera, a multi-media player or a game device.

In step S210, screen data is displayed in the touch-sensitive display unit 120. It is understood that, in some embodiments, the screen data can be obtained from the storage unit 110. In some embodiments, the screen data can be downloaded from a web site, and the screen data may be dynamically updated. In step S220, contacts and movements of an object, such as a pen/stylus or a finger near or on the touch-sensitive display unit 120 are received/detected. It is understood that, in some embodiments, users may use the object to make notes or perform operations to the screen data. In step S225, it is determined whether the object is a pen or not. It is understood that, in some embodiments, it is determined whether the object is a pen or not by detecting whether a pen is in proximity to the electronic device or the touch-sensitive display unit. In some embodiments, when a signal transmitted from the pen is detected/received, a pen is determined as in proximity to the electronic device or the touch-sensitive display unit. When the object is a pen (Yes in step S225), in step S230, a screenshot for the screen data and gestures corresponding to the object on the touch-sensitive display unit is generated. It is understood that, in some embodiment, the screen data and the gestures can be merged to generate the screenshot. Further, it is understood that, in some embodiments, the screen data can be obtained from a memory buffer (not shown) of the touch-sensitive display unit 120, or directly from an application, such as a browser. It is noted that, when the object is a pen, the contacts and movements of the object on the touch-sensitive display unit 120 can form gestures, and the gestures corresponding to the object can be displayed in the touch-sensitive display unit 120. It is understood that, in some embodiments, a multi-layer display technique can be employed in the present application, wherein multiple display layers can be displayed simultaneously in the touch-sensitive display unit 120. When multiple display layers are simultaneously displayed in the touch-sensitive display unit 120, all or a part of a picture displayed in a lower display layer can be covered by another picture displayed in an upper display layer. The upper display layer is visually above the lower display layer. In some embodiments, the gestures corresponding to the object can be displayed in the upper display layer, and the screen data can be displayed in the lower display layer. When the object is not a pen (No in step S225), in step S240, an operation is performed to the screen data based on the gestures corresponding to the object on the touch-sensitive display unit. For example, when the object is a pen, the gesture corresponding to the object is displayed in the upper display layer, and used to generate a screenshot with the screen data. When the object is not a pen, for example a finger, an operation is performed to the screen data displayed in the lower display layer based on the gesture corresponding to the object That is, the gesture corresponding to the object is applied to the screen data displayed in the lower display layer when the object is not a pen. For example, when a user uses a pen to draw a line on the touch-sensitive display unit, the line will be displayed in the touch-sensitive display unit, as a note to the screen data displayed in the touch-sensitive display unit. When a user uses a finger to draw a line on the touch-sensitive display unit, the line will be a command to pan the screen data displayed in the touch-sensitive display unit.

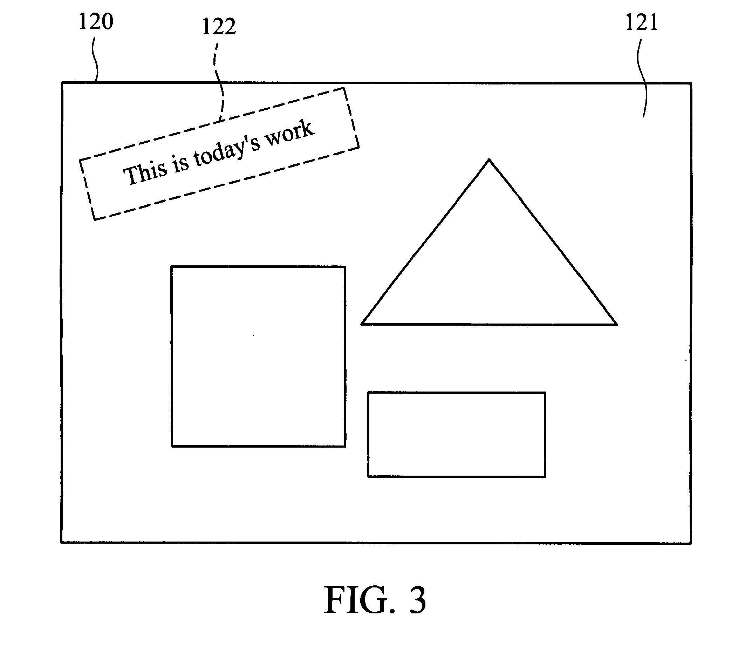

Fig. 3 is a schematic diagram illustrating an embodiment of an example of screen data management of the invention. As shown in Fig. 3, the touch-sensitive display unit 120 can display screen data 121. Users can use a pen to make notes 122 on the touch-sensitive display unit 120. The screen data 121 and the notes 122 can be simultaneously displayed in the touch-sensitive display unit 120. The system for screen data management 100 of the present application can automatically generate a screenshot by integrating the screen data 121 and the notes 122. The screenshot can be saved or shared to others.

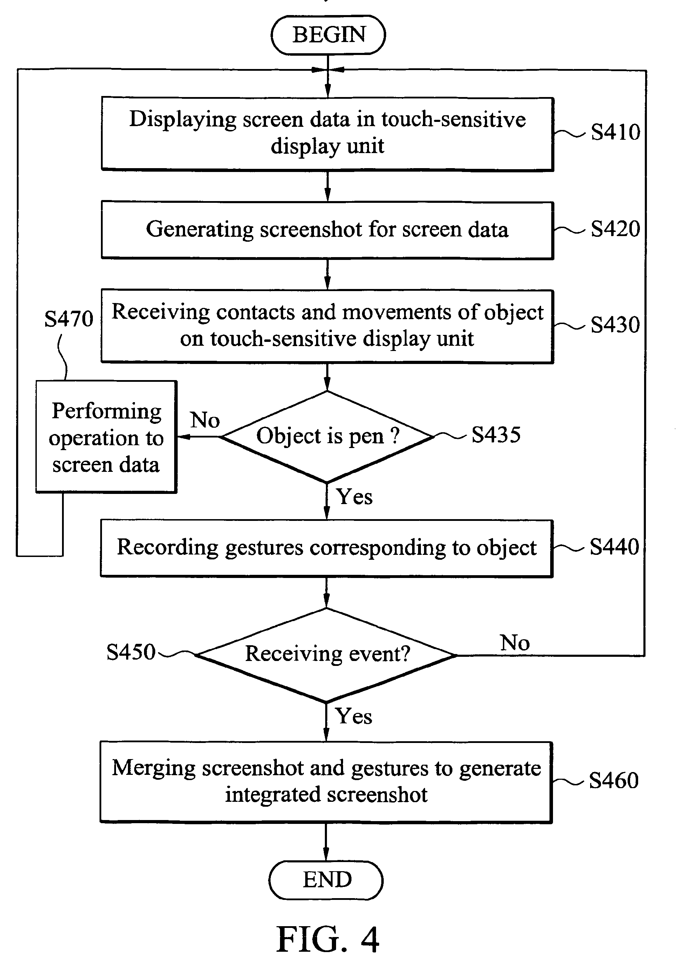

Fig. 4 is a flowchart of another embodiment of a method for screen data management of the invention. The method for screen data management can be used for an electronic device, such as a PDA, a smart phone, a mobile phone, an MID, a laptop computer, a car computer, a digital camera, a multi-media player or a game device.

In step S410, screen data is displayed in the touch-sensitive display unit 120. Similarly, in some embodiments, the screen data can be obtained from the storage unit 110. In some embodiments, the screen data can be downloaded from a web site, and the screen data may be dynamically updated. In step S420, a screenshot for the screen data currently displayed in the touch-sensitive display unit 120 is generated. Similarly, the screen data can be obtained from a memory buffer (not shown) of the touch-sensitive display unit 120, or directly from an application, such as a browser. It is understood that, in some embodiments, the screenshot for the screen data can be generated when an object, such as a pen/stylus or finger touches the touch-sensitive display unit 120. In some embodiments, the screenshot for the screen data can be generated periodically. As described, the screen data may be dynamically updated. In some embodiments, the screenshot for the screen data can be generated when the screen data is updated. It is noted that, the screenshot can be stored in the storage unit 110. In step S430, contacts and movements of the object near or on the touch-sensitive display unit 120 are received/detected. Similarly, in some embodiments, users may use the object to make notes or perform operations to the screen data. In step S435, it is determined whether the object is a pen or not Similarly, in some embodiments, it is determined whether the object is a pen or not by detecting whether a pen is in proximity to the electronic device or the touch-sensitive display unit. In some embodiments, when a signal transmitted from the pen is detected/received, a pen is determined as in proximity to the electronic device or the touch-sensitive display unit. When the object is a pen (Yes in step S435), in step S440, the gestures corresponding to the object are recorded and stored to the storage unit 110. It is understood that, the contacts and movements of the object on the touch-sensitive display unit 120 can form gestures. In some embodiments, the gestures corresponding to the object can be displayed in the touch-sensitive display unit 120. Similarly, in some embodiments, a multi-layer display technique can be employed in the present application, wherein multiple display layers can be displayed simultaneously in the touch-sensitive display unit 120. When multiple display layers are simultaneously displayed in the touch-sensitive display unit 120, all or a part of a picture displayed in a lower display layer can be covered by another picture displayed in an upper display layer. The upper display layer is visually above the lower display layer. In some embodiments, the gestures corresponding to the object can be displayed in the upper display layer, and the screen data can be displayed in the lower display layer. In step S450, it is determined whether an event is received. It is understood that, in some embodiment, the event may be a save instruction, or a share instruction. If no event is received (No in step S450), the procedure returns to step S410. If an event is received (Yes in step S450), in step S460, the screenshot generated in step S420 and the gestures corresponding to the object on the touch-sensitive display unit are merged to generate an integrated screenshot. In some embodiments, in response to the event, such as a save instruction or a share instruction, the integrated screenshot can be saved to the storage unit or transmitted to a device via a wireless network. When the object is not a pen (No in step S435), in step S470, an operation is performed to the screen data based on the gestures corresponding to the object on the touch-sensitive display unit. For example, when the object is a pen, the gesture corresponding to the object is displayed in the upper display layer, and used to generate a screenshot with the screen data. When the object is not a pen, for example a finger, an operation is performed to the screen data displayed in the lower display layer based on the gesture corresponding to the object. That is, the gesture corresponding to the object is applied to the screen data displayed in the lower display layer when the object is not a pen.

Therefore, the methods and systems for screen data management can automatically generate a screenshot for screen data and gestures of an object, such as notes on the touch-sensitive display unit, thus increasing operational convenience, and reducing power consumption of electronic devices for complicated operations between applications

Methods for screen data management, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

## Claims

1. A computer-implemented method for screen data management, for use in an electronic device, comprising:
generating (S420) a screenshot for screen data displayed in a touch-sensitive
display unit
receiving contacts and movements (S430) of an object on the touch-sensitive
display unit;
determining whether the object is a pen or not (S435);
recording gestures (S440) corresponding to the contacts and movements of the
object when the object is a pen;
receiving an event (S450); and
in response to the event, merging the screenshot and the gestures (S460)
cowesponding to the contacts and movements of the object to generate an integrated screenshot,
the method further comprising performing an operation to the screen data
displayed in the touch-sensitive display unit based on the gestures corresponding to the contacts and movements of the object when the object is not a pen.

2. The method of claim 1, wherein the screenshot for the screen data displayed in the touch-sensitive display unit is generated periodically.

3. The method of claim 1 or 2, wherein the screenshot for the screen data displayed in the touch-sensitive display unit is generated when the object touches the touch-sensitive display unit.

4. The method of one or more of the claims 1 to 3, further comprising displaying the gestures corresponding to the contacts and movements of the object in the touch-sensitive display unit.

5. The method one or more of the claims 1 to 4, wherein the event comprises a save instruction, or a share instruction.

6. The method of claim 5, further comprising saving the integrated screenshot, or transmitting the integrated screenshot to a device via a wireless network.

7. The method of one or more of the claims 1 to 6, wherein the step of determining whether the object is a pen or not is performed by detecting whether a pen is in proximity to the electronic device or the touch-sensitive display unit, wherein the pen is in proximity to the electronic device or the touch-sensitive display unit when a signal transmitted from the pen is detected by the electronic device or the touch-sensitive display unit.

8. A system (100) for screen data management for use in an electronic device, comprising:
a storage unit (110);
a touch-sensitive display unit (120) displaying screen data; and
a processing unit (130) generating a screenshot for the screen data, receiving
contacts and movements of an object on the touch-sensitive display unit, determining whether the object is a pen or not, recording gestures corresponding to the contacts and movements of the object to the storage unit when the object is a pen, receiving an event, and in response to the event, merging the screenshot and the gestures corresponding to the contacts and movements of the object to generate an integrated screenshot,
wherein the processing unit (130) further performs an operation to the screen
data displayed in the touch-sensitive display unit based on the gestures corresponding to the contacts and movements of the object when the object is not a pen.

9. The system of claim 8, wherein the processing unit periodically generates the screenshot for the screen data.

10. The system of the claims 8 or 9, wherein the processing unit generates the screenshot for the screen data when the object touches the touch-sensitive display unit.

11. The system of one or more of the claims 8 to 10, wherein the processing unit further displays the gestures corresponding to the contacts and movements of the object via the touch-sensitive display unit.

12. The system of one or more of the claims 8 to 11, wherein the event comprises a save instruction, or a share instruction.

13. The system of claim 12, wherein the processing unit further saves the integrated screenshot, or transmits the integrated screenshot to a device via a wireless network.

14. The system of one or more of the claims 8 to 13, wherein the processing unit determines whether the object is a pen or not by detecting whether a pen is in proximity to the electronic device or the touch-sensitive display unit, wherein the pen is in proximity to the electronic device or the touch-sensitive display unit when a signal transmitted from the pen is detected by the electronic device or the touch-sensitive display unit.

## Patentansprüche

1. Ein computerimplementiertes Verfahren für ein Bildschirm-Datenmanagement zur Verwendung in einer elektronischen Vorrichtung, umfassend:
Erzeugen (S420) eines Screenshot von Bildschirmdaten, die in einer berührungsempfindlichen Displayeinheit angezeigt werden;
Empfangen von Berührungen und Bewegungen (S430) eines Objekts auf der berührungsempfindlichen Displayeinheit;
Bestimmen, ob das Objekt ein Stift ist oder nicht (S435);
Aufzeichnung von Gesten (S440) entsprechend zu den Berührungen und
Bewegungen des Objekts, wenn das Objekt ein Stift ist;
Empfangen eines Ereignisses (S450); und
in Reaktion auf das Ereignis, Zusammenführen des Screenshots und der Gesten (S460) entsprechend der Berührungen und Bewegungen des Objekts, um einen integrierten Screenshot zu erzeugen,
das Verfahren ferner umfassend das Durchführen einer Operation auf den angezeigten Bildschirmdaten in der berührungsempfindlichen Displayeinheit basierend auf den Gesten, die den Berührungen und Bewegungen des Objekts entsprechen, wenn das Objekt kein Stift ist.

2. Das Verfahren nach Anspruch 1, wobei der Screenshot für die Bildschirmdaten, die in der berührungsempfindlichen Displayeinheit angezeigt werden, periodisch erzeugt wird.

3. Das Verfahren nach Anspruch 1 oder 2, wobei der Screenshot für die Bildschirmdaten, der in der berührungsempfindlichen Displayeinheit angezeigt wird, erzeugt wird, wenn das Objekt die berührungsempfindliche Displayeinheit berührt.

4. Das Verfahren nach einem oder mehreren der Ansprüche 1 bis 3, ferner umfassend das Anzeigen der Gesten entsprechend zu den Berührungen und Bewegungen des Objekts in der berührungsempfindlichen Displayeinheit.

5. Das Verfahren nach einem oder mehreren der Ansprüche 1 bis 4, wobei das Ereignis eine Speicheranweisung oder eine Teilanweisung umfasst.

6. Das Verfahren nach Anspruch 5, ferner umfassend das Speichern des integrierten Screenshots oder Übertragen des integrierten Schreenshots zu einem Gerät über ein drahtloses Netzwerk.

7. Das Verfahren nach einem oder mehreren der Ansprüche 1 bis 6, wobei der Schritt des Bestimmens, ob das Objekt ein Stift ist oder nicht, durchgeführt wird durch Detektierten, ob ein Stift in der Nähe der elektronischen Vorrichtung oder der berührungsempfindlichen Displayeinheit ist, wobei der Stift in der Nähe der elektronischen Vorrichtung oder der berührungsempfindlichen Displayeinheit ist, wenn ein Signal das vom Stift übertragen wird, von der elektronischen Vorrichtung oder der berührungsempfindlichen Displayeinheit erkannt wird.

8. Ein System (100) für Bildschirm-Datenmanagement zur Verwendung in einer elektronischen Vorrichtung, umfassend:
eine Speichereinheit (110);
eine berührungsempfindliche Displayeinheit (120) zum Anzeigen von Bildschirmdaten; und
eine Verarbeitungseinheit (130) zum Erzeugen eines Screenshots für die Bildschirmdaten, Empfangen von Berührungen und Bewegungen eines Objekts auf der berührungsempfindlichen Displayeinheit, Bestimmten, ob das Objekt ein Stift ist oder nicht, Aufzeichnung von Gesten entsprechend zu den Berührungen und den Bewegungen des Objekts in der Speichereinheit, wenn das Objekt ein Stift ist,
Empfangen eines Ereignisses und in Reaktion auf das Ereignis, Zusammenführen des Screenshots und der Gesten entsprechend den Berührungen und Bewegungen des Objekts, um einen integrierten Screenshot zu erzeugen,
wobei die Verarbeitungseinheit (130) weiter eine Opertation auf die Bildschirmdaten,
die in der berührungsempfindlichen Displayeinheit angezeigt werden, auf der Grundlage der Gesten entsprechend zu den Berührungen und Bewegungen des Objekts durchführt, wenn das Objekt kein Stift ist.

9. Das System nach Anspruch 8, wobei die Verarbeitungseinheit periodisch den Screenshot für die Bildschirmdaten erzeugt.

10. Das System nach Anspruch 8 oder 9, wobei die Verarbeitungseinheit den Screenshot für die Bildschirmdaten erzeugt, wenn das Objekt die berührungsempfindliche Displayeinheit berührt.

11. Das System nach einem oder mehreren der Ansprüche 8 bis 10, wobei die Verarbeitungseinheit weiterhin die Gesten entsprechend zu den Berührungen und Bewegungen des Objektes über die berührungsempfindliche Displayeinheit anzeigt.

12. Das System nach einem oder mehreren der Ansprüche 8 bis 11, wobei das Ereignis eine Speicheranweisung oder eine Teilanweisung umfasst.

13. Das System nach Anspruch 12, wobei die Verarbeitungseinheit ferner den integrierten Screenshot speichert oder den integrierten Screenshot zu einem Gerät über ein drahtloses Netzwerk übermittelt.

14. Das System nach einem oder mehreren der Ansprüche 8 bis 13, wobei die Verarbeitungseinheit bestimmt, ob das Objekt ein Stift oder nicht ist, durch Erfennen, ob ein Stift in der Nähe zu der elektronischen Vorrichtung oder der berührungsempfindlichen Displayeinheit ist, wobei der Stift in der Nähe der elektronischen Vorrichtung oder der berührungsempfindlichen Displayeinheit ist, wenn ein Signal, das vom Stift übertragen wird, von der elektronischen Vorrichtung oder der berührungsempfindlichen Displayeinheit erkannt wird.

## Revendications

1. Un procédé implémenté par ordinateur pour la gestion de données d'écran, pour utilisation au sein d'un dispositif électronique, comprenant :
la génération (S420) d'une copie d'écran pour des données d'écran affichées au sein d'une unité d'affichage tactile ;
la réception de contacts et mouvements (S430) d'un objet sur l'unité d'affichage tactile ,
la détermination du fait de savoir si l'objet est un stylo ou non (S435) ;
l'enregistrement de gestes (S440) correspondant aux contacts et mouvements de l'objet lorsque l'objet est un stylo;
la réception d'un événement (S450) ; et
en réponse à l'événement, l'association de la copie d'écran et des gestes (S460) correspondant aux contacts et mouvements de l'objet pour générer une copie d'écran intégrée,
le procédé comportant en outre la mise en oeuvre d'une opération sur les données d'écran affichées sur l'unité d'affichage tactile sur la base des gestes correspondant aux contacts et mouvements de l'objet lorsque l'objet n'est pas un stylo.

2. Le procédé de la revendication 1, dans lequel est générée périodiquement la copie d'écran pour les données d'écran affichées par l'unité d'affichage tactile.

3. Le procédé de la revendication 1 ou 2, dans lequel est générée la copie d'écran pour les données d'affichage affichées par l'unité d'affichage tactile lorsque l'objet touche l'unité d'affichage tactile.

4. Le procédé selon l'une ou plusieurs des revendications 1 à 3, comprenant en outre l'affichage par l'unité d'affichage tactile des gestes correspondant aux contacts et mouvement de l'objet.

5. Le procédé selon l'une ou plusieurs des revendications 1 à 4, dans lequel l'événement comporte une instruction de sauvegarde ou une instruction de partage.

6. Le procédé de la revendication 5, comprenant en outre la sauvegarde de la copie d'écran intégrée, ou la transmission de la copie d'écran intégrée à un dispositif via un réseau sans fil.

7. Le procédé selon l'une ou plusieurs des revendications 1 à 6, dans lequel l'étape de détermination du fait de savoir si l'objet est un stylo ou non est effectuée au moyen de la détection d'un stylo à proximité du dispositif électronique ou de l'unité d'affichage tactile, dans lequel le stylo est à proximité du dispositif électronique ou de l'unité d'affichage tactile lorsqu'un signal transmis du stylo est détecté par le dispositif électronique ou l'unité d'affichage tactile.

8. Un système (100) pour la gestion de données d'écran pour une utilisation au sein d'un dispositif électronique, comprenant :
une unité de stockage (110) ;
une unité d'affichage tactile (120) affichant des données d'écran ; et
une unité de traitement (130) générant une copie d'écran pour les données d'écran, la réception de contacts et mouvements d'un objet sur l'unité d'affichage tactile, la détermination du fait de savoir si l'objet est un stylo ou non, l'enregistrement dans l'unité de stockage des gestes correspondant aux contacts et mouvements de l'objet lorsque l'objet est un stylo, la réception d'un événement, et en réponse à l'événement, l'association de la copie d'écran et des gestes correspondant aux contacts et mouvements de l'objet pour la génération d'une copie d'écran intégrée,
dans lequel l'unité de traitement (130) réalise en outre la mise en oeuvre d'une opération sur les données d'écran affichées par l'unité d'affichage tactile sur la base des gestes correspondant aux contacts et mouvements de l'objet lorsque l'objet n'est pas un stylo.

9. Le système de la revendication 8 dans lequel l'unité de traitement génère périodiquement la copie d'écran pour les données d'écran.

10. Le système de la revendication 8 ou 9, dans lequel l'unité de traitement génère la copie d'écran pour les données d'écran lorsque l'objet touche l'unité d'affichage tactile.

11. Le système de l'une ou plusieurs des revendications 8 à 10, dans lequel l'unité de traitement affiche en outre les gestes correspondant aux contacts et mouvement de l'objet via l'unité d'affichage tactile.

12. Le système de l'une ou plusieurs des revendications 8 à 11, dans lequel l'événement comporte une instruction de sauvegarde ou une instruction de partage.

13. Le système de la revendication 12, dans lequel l'unité de traitement sauvegarde en outre la copie d'écran intégrée, ou transmet la copie d'écran intégrée à un dispositif via un réseau sans fil.

14. Le système selon l'une ou plusieurs des revendications 8 à 13, dans lequel l'unité de traitement détermine que l'objet est un stylo ou non par la détection d'un stylo à proximité du dispositif électronique ou de l'unité d'affichage tactile, dans lequel le stylo est à proximité du dispositif électronique ou de l'unité d'affichage tactile lorsqu'un signal transmis du stylo est détecté par le dispositif électronique ou l'unité d'affichage tactile,
